Europäisches Patentamt

European Patent Office

Office européen des brevets

(11) Publication number: **0 130 381**
A2

# (12) EUROPEAN PATENT APPLICATION

(21) Application number: **84106179.9**

(22) Date of filing: **30.05.84**

(51) Int. Cl.⁴: **G 06 F 9/30,** G 06 F 9/32

(30) Priority: **30.06.83 US 509734**

(43) Date of publication of application: **09.01.85**
**Bulletin 85/2**

(84) Designated Contracting States: **DE FR GB**

(71) Applicant: **International Business Machines Corporation,
Old Orchard Road, Armonk, N.Y. 10504 (US)**

(72) Inventor: **Auslander, Marc Alan, 12 Hidden Hollow Lane,
Millwood New York 10546 (US)**
Inventor: **Hao, Hsieh Tung, 5 Alta Lane, Chappaqua New
York 10514 (US)**
Inventor: **Hopkins, Martin Edward, 300 Douglas Road,
Chappaqua New York 10514 (US)**
Inventor: **Markstein, Peter Willy, 2127 Ridge Street,
Yorktown Heights New York 10598 (US)**
Inventor: **Radin, George, 26 Franklin, Piermont New
York 10968 (US)**
Inventor: **Worley, William Spencer, Jr., 19316 Falmouth
Court, Saratoga California 95070 (US)**

(74) Representative: **Ekström, Gösta E., IBM Svenska AB
Box 962, S-181 09 Lidingö (SE)**

(54) **Mechanism for implementing one machine cycle executable branch-on-any-bit-in-any-register instructions in a primitive instruction set computing system.**

(57) A mechanism for fully executing a branch-on-any-bit-in-any-register instruction within one machine cycle of the host computing system. The invention has particular utility in a primitive instruction set computing system wherein a majority of its primitive instruction set is executable within such a single machine cycle. Means are provided whereby a branch decision may be made not only on a specified bit in the condition register, but on any bit in any of the general purpose registers (30) provided in the system CPU. Means are also provided for saving a given configuration of the condition register in the general purpose registers for later use in subsequent branch-on-bit operations.

MECHANISM FOR IMPLEMENTING ONE MACHINE CYCLE
EXECUTABLE BRANCH-ON-ANY-BIT-IN-ANY-
REGISTER INSTRUCTIONS IN A PRIMITIVE INSTRUCTION
SET COMPUTING SYSTEM

The present invention has particular utility in
a primitive instruction set computer architecture,
two examples of which are described in considerable
detail, as to their basic architectural features
as well as overall design considerations, in
the two articles (1) "The 801 Minicomputer," by
George Radin and (2) "RISC I:A Reduced Instruction
Set VLSI Computer," by Patterson and Sequin.  The
complete bibliographic data for these two articles
is set forth more fully in the subsequent
Prior Art section.

Current developments in the semiconductor industry
indicate that very large-scale integration (VLSI)
affords microprocessor designers two conflicting
approaches to designing future systems.  The first
is that they can continue the current trend, where
VLSI is used to build increasingly complex microprocessors, where greater complexity is exhibited
as more hardware to do functions previously done
by software alone.  Alternatively, they can take
the opposite approach and build simpler, very
fast processors, where more functions are done
by software.  This second approach is exemplified
in the two above-referenced articles.

Greater complexity lets designers use ever-cheaper VLSI circuits in place of increasingly expensive and processor time consuming software. What's more, the takeover of many software functions by hardware is said to help programmers develop high-level language (HLL) programs that are shorter, more efficient, and easier to write, compile and debug. More complex systems would, in theory, reduce the high cost of developing software and thus reduce the total life-cycle cost of a system.

Thus, system designers following the first approach, increase the complexity of architectures commensurate with the increasing potential of implementation technologies, as exemplified by the complex successors of simpler machines. Compare, for example, VAX 11 to PDP-11, IBM System/38 to IBM System/3, and Intel APX-432 to 8086. The consequences of this complexity are increased design time, an increased potential for design errors and inconsistent implementations. This class of computers has been referred to in the literature as complex instruction set computing (CISC) systems.

As indicated previously in the above referenced article "The 801 Minicomputer" by G. Radin, a coinventor of the present invention, a unique approach to overall CPU architecture has been realized following the second of the two previously mentioned approaches to architecture design, i.e., a reduced instruction set computer. The heart of such a system architecture is its CPU. Most of the aspects of this system are designed to make available to the user the fundamental power of the underlying CPU. The overall organization is somewhat different from more conventional CPUs.

There will now follow a brief overall description of the CPU design strategy utilized in the CPU of the Radin article followed by a more specific description of the details of the CPU insofar as is deemed necessary to provide a basis for understanding how the present invention fits into the overall system architectural scheme.

Conventional CPUs for general purpose systems in the middle range of cost are organized as hardwired microprocessors "interpreting" the architecture of the CPU. Thus the execution of a CPU instruction normally requires the execution of several "micro-instructions" which normally reside in a high-speed memory called a "control store." The number of such micro-instructions (or "machine cycles") required to execute an average CPU instruction depends on the power (hence cost) of the underlying microprocessor, the complexity of the CPU architecture, and the application being run (i.e., the instruction mix). Typically, for instance, an IBM S/370 model 168 will require 3-6 cycles per S/370 instruction, a model 148 will take 10-15 and a S/360 model 30 will need over 30 cycles.

Very sophisticated S/370 CPU designs have demonstrated the possibility of approaching one machine cycle per instruction by using techniques of look-ahead, parallel execution and keeping branch histories.

Instruction mixes for different application types show differences in frequency of execution of instructions. For instance, scientific applications will use the S/370 floating point instructions and commercial applications will use decimal arithmetic. But, especially when an entire running system is traced instead of just the application code, there is a
remarkable similarity in the list of most popular
instructions. Moreover, these tend to be rather simple
functions, such as load, store, branch, compare,
integer arithmetic, logic shifting. These same functions generally are found to be in the instruction
repertoire of the underlying microprocessor. Thus,
for these functions, it was considered wasteful to
pay the interpretive overhead necessary when the
micro-architecture does not precisely match the CPU
architecture.

Therefore, the primitive instruction set designed
for the subject primitive instruction set machine
system may be directly executed by hardware. (In
the subsequent description, the acronym PRISM will
be used instead of the full expression PRimitive
Instruction Set Machine for convenience of
reference.) That is, every primitive instruction
takes exactly one machine cycle. Complex functions are implemented in "micro-code" just as they
are in conventional CPUs, except that in the
present system this micro-code is just code;that
is, the functions are implemented by software
subroutines running on the primitive instruction
set.

The advantages of micro-code that accrue because
it resides in high-speed control store virtually
disappears with a memory hierarchy in which the cache
is split into a part that contains data and a part
that contains instructions. The instruction cache
acts as a "pageable" control store because frequently-
used functions will, with very high probability, be
found in this high-speed memory. The major difference
is that in a conventional CPU the architect decides
in advance which functions will most frequently be used across all applications.  Thus, for instance, double precision floating point divide always resides in high speed control store while the First Level Interrupt Handler may be in main memory.  With an instruction cache it is recent usage that decides which functions will be available more quickly.

With this approach, the number of cycles required to do a particular job is at worst no more than on a conventional (low-to-moderately priced) CPU in which the complex instructions have been microprogrammed. But by carefully defining the primitive instructions to be an excellent target machine for the compiler it has been found that far fewer cycles are actually required.  In fact, for systems programs, fewer instructions are required than S/370 <u>instructions</u>.

Most instruction mixes show that between 20% and 40% of instructions go to storage to send or receive data, and between 15% and 30% of instructions are branches. Moreover, for many applications, a significant percent of the memory bandwidth is taken for I/O.  If the CPU is forced to wait many cycles for storage access, its internal performance will be wasted.

The second major goal of the present (PRISM) system design, therefore, was to organize the storage hierarchy and develop a system architecture to minimize CPU idle time due to storage access.  First, it was clear that a cache was required whose access time was consistent with the machine cycle of the CPU.  Secondly, a "store-in-cache" strategy was used (instead of "storing through" to the backing store) so that the 10% to 20% of expected store instructions would not degrade the performance severely.  (For instance, if the time to store a word is ten cycles, and 10% of instructions are stores, the CPU will be idle about half the time unless it can overlap execution of the instructions following the store.) But a CPU organization which needs a new instruction at every cycle as well as accessing data every third cycle will be degraded by a conventional cache which delivers a word every cycle. Thus the cache was split into a part containing data and a part containing instructions. In this way the bandwidth to the cache was effectively doubled and asynchronous fetching of instructions and data from the backing store was permitted.

Conventional architectures make this decision difficult because every store of data can be a modification of an instruction, perhaps even the one following the store. Thus the hardware must ensure that the two caches are properly synchronized, a job that is either expensive or degrading, or (generally) both. Even instruction prefetch mechanisms are complex since the effective address of a store must be compared to the Instruction Address Register.

It has been found, however, that as soon as index registers were introduced into computers the frequency of instruction modification fell dramatically until, today, instructions are virtually never modified. Therefore, the PRISM architecture does not require this hardware broadcasting. Instead it exposes the existence of the split cache and provides instructions by which software can synchronize the caches when required, which is only in such functions as "program fetch."

Similarly, in conventional systems in which the existence of a cache is unobservable to the software, I/O must (logically) go through the cache. This is often accomplished in less expensive systems by sending the I/O physically through the cache.

The result is that the CPU must wait while the I/O proceeds, and that after an I/O burst the contents of the cache no longer reflect the working set of the process being executed, forcing it back into transient mode. Even in expensive systems a broadcasting or directory-duplication strategy may result in some performance degradation.

It was noted that responsibility for the initiation of I/O in current systems was evolving toward system access methods using fixed block transfers and a buffer strategy which normally moved data between subsystem buffers and user areas (e.g., IMS, VTAM, VSAM, paging). This implies that the access method knows the location and extent of the buffer and knows when an I/O transfer is in process. Thus this software can properly synchronize the caches, and the "channel" (Direct Memory Adapter in the PRISM system) can transmit directly to and from the backing store. The result of this system approach is that even when half of the memory bandwidth is being used for I/O the CPU is virtually undegraded.

Notice that in all of the preceding discussions an underlying strategy is being applied. Namely, wherever there is a system function which is expensive or slow in all its generality, but where software can recognize a frequently occurring degenerate case (or can move the entire function from run time to compile time) that function is moved from hardware to software, resulting in lower cost and improved performance.

One interesting example of the application of this overall design strategy concerns managing the cache itself. In the PRISM system the cache line is 32 bytes and the largest unit of a store is four bytes. In such a cache, whose line size is larger than the unit of a store and in which a "store in cache" approach is taken, a store directed at a word which is not in the cache must initiate a fetch of the entire line from the backing store into the cache. This is because, as far as the cache can tell, a load of another word from this line might be requested subsequently. Frequently, however, the store is simply the first store into what, to the program, is newly acquired space. It could be temporary storage on a process stack (e.g., PL/I Automatic) just pushed on procedure call;it could be an area obtained by a Getmain request;or it could be a register store area used by the First Level Interrupt Handler. In all of these cases the hardware does not know that no old values from that line will be needed, while to the software this situation is quite clear.

Accordingly, an instruction has been defined in the PRISM system called SET DATA CACHE LINE, which instructs the cache to establish the requested line in its directory but not to get its old values from the backing store. (Thus, after execution of this instruction, the values in this line will be whatever happened to be in the cache at the time.) If this instruction is executed whenever fresh storage is acquired unnecessary fetches from the backing store will be eliminated. (On the other hand, the execution of the instruction for each new line itself adds CPU cycles. Performance modelling on specific hardware configurations running specific applications will indicate the best tradeoff.)

0130381

Similarly, when a scratch storage area is no longer needed, executing the instruction INVALIDATE DATA CACHE LINE will turn the "changed" bit off in the cache directory entry corresponding to the named line, thus eliminating an unnecessary storeback. (See copending PCT Application Serial No. U. S. 82/01830).

The above general discussion of the PRISM features which result in overlapped access to the cache between instructions and data, overlapped backing store access among the caches and I/O, less hardware synchronizing among the caches and I/O, and techniques to improve the cache hit ratios, indicates the overall flavor of the PRISM design objectives.

However, to fully realize the potential objectives of the PRISM system's overall design approach, it has been found advantageous to include certain hardware modifications whereby a number of powerful one-machine cycle executable instructions are available. Five of these architectural features are set forth and described in the present application and the four copending related patent applications:

U. S. Patent Serial No. 509733    (YO983-008)
U. S. Patent Serial No. 509744    (YO983-009)
U. S. Patent Serial No. 509836    (YO983-011)
U. S. Patent Serial No. 566925    (YO983-015)

The subject application is related to other copending applications having different inventorship entities

0130381

and owned by the same assignee as the present
application.  These other applications are:


1) U. S. Patent Application Serial No. 509733
(IBM YO983008), entitled "Mechanism for Implementing
One Machine Cycle Executable Trap Instructions
in a Primitive Instruction Set Computing System,"
by M. A. Auslander, J. Cocke, H. Hao, P. W. Markstein
and G. Radin.


2) U. S. Patent Application Serial No. 509744
(IBM YO983-009), entitled "Condition Register
Architecture for a Primitive Instruction Set Machine,"
by M. Auslander, J. Cocke, H. Hao, P. W. Markstein
and G. Radin.


3) U. S. Patent Application Serial No. 509836
(IBM YO983-011), entitled "Mechanism for Implementing
One Machine Cycle Executable Mask and Rotate
Instructions in a Primitive Instruction Set Computing
System," by H. Hao, P. W. Markstein and G. Radin.


4) U. S. Patent Application Serial No. 566925
(IBM YO983-015), entitled "Internal Bus Architecture
for a Primitive Instruction Set Machine," by
J. Cocke, D. Fisk, L. Pereira and G. Radin.


The two following PCT applications filed December 30,
1982 are related to the present application in
that they also have particular memory hierarchy

0130381

including a split cache and to an address translation mechanism respectively.

1) PCT Serial No. U. S. 82/01830, entitled "Hierarchical Memory System Including Separate Cache Memories for Storing Data and Instructions," by F. P. Carrubba, J. Cocke, N. H. Kreitzer and G. Radin.

2) PCT serial No. U. S. 82/01829, entitled "Virtual Memory Address Translation Mechanism with Controlled Data Persistence," by A. Chang, J. Cocke, M. F. Mergen and G. Radin.

An article entitled "The 801 Minicomputer," by George Radin, published in ACM SIGPLAN NOTICES, Vol. 17, No. 4, April 1982, pages 39-47, includes a general description of an experimental computer whose operational characteristics depend to a large extent on a very fast memory subsystem having separate caches for instruction and data and also having a primitive very basic instruction set providing commonly used machine operations most of which should be executable in a single machine cycle. The present one cycle executable branch-on-any-bit-in-any-register instructions have particular utility in such a machine architecture.

A similar CPU architecture has been described by Patterson and Sequin in "RISC 1:a Reduced Instruction Set VLSI Computer," in the IEEE 8th Annual Symposium on Architecture Conference Proceedings of May 12-14, 1981, at pages 443-449, and in expanded form in IEEE Computer, September 1982 at pages 8-20. The RISC 1:system is stated

0130381

to be a reduced instruction set machine. No reference is made to any special branch or bit instruction or hardware for implementing same.

It should be first stated that no prior art is known to exist especially relating to the concept of performing a branch-on-any-bit-in-any-register which is basic to the present invention. The following cited patents are considered relevant in that they generally indicate that a conditional operation or sequence of operation will occur in a computing system depending upon whether a particular bit of a set by previously specified condition.

U. S. Patent 4,124,893 of Joyce et al generally discloses a micro program read only memory wherein micro instructions stored therein have a particular bit (branch bit) to cause the micro program to branch to another micro program remotely located in the memory rather than following the normal sequence of execution, if some specified conditions are satisfied.

U. S. Patent 3,344,404 of Curewitz discloses the basic concepts of a machine word wherein certain bits comprise data and other bits are utilized to detect control of the system operations.

U. S. Patent 4,194,241 of Mager discloses generating a multi-bit bit mask from an instruction presented to the system, means for comparing the bit mask against a target word and for partially generating a branch condition indication if the mask test is successful. Its patent similarly does not relate to the specific branch on bit features of the present invention.

0130381

It is a primary object of the present invention to provide a hardware mechanism to perform a branch or jump on bit test in a single machine cycle with minimum logic circuitry.

It is a further object to provide such a mechanism wherein a test bit can be a specified bit in the condition register or any bit in any GPR register.

It is a further object to provide a fast nondestructive bit test capability on any bit in any GPR register. Otherwise, to perform the same function without this invention, the programmer would have to use AND to register instructions and some work register would have to be provided in order not to destroy the contents of the register under test.

It is a further object to provide a means for programmers to be able to save the Condition Register in a GPR for future bit test use, since any bit in any register in the GPRs may be directly tested.

It is a further object to provide such a mechansim operable in response to symmetrical instructions provided for flexibility and ease of use for performing tests for:

Branch or Jump
CR or GPR
True or False
with or without execute

Symmetrical used herein means that less information has to be remembered by the programmer, e.g., an alternate operation may be specified by a very slight change of the instruction.

The objects of the present invention are accomplished in general by a special class of branch-on-bit instructions and a mechanism for implementing same wherein the instructions specify that a bit to be tested is located either in the condition register or in any of the general purpose registers in the CPU. The instruction includes a field for indicating which register is to be tested, which bit in the specified register is to be tested, the condition (1,0) being tested for, and sufficient data for determining the address of the next instruction to be executed if the branch test is successful.

A mechanism is provided for performing said branch-on-any-bit-in-any-register instructions which nondestructively accesses the contents of a specified general purpose register performs the specified bit test and generates the address of the 'branch a target' instruction all within one machine cycle.

The invention, which is defined in the attached claims, is described in detail below with reference to the drawings, which show one embodiment of the invention, in which:

FIG. 1 comprises a high level block diagram of the primary system components including the CPU, main storage, the D and I caches, the system I/O bus and the internal bus with a number of bus units attached thereto.

FIG. 2 comprises an organizational drawing for FIGS. 2A and 2B.

FIGS. 2A and 2B comprise a functional block diagram and data flow diagram of a CPU designed to utilize the Branch-on-any-bit-in-any-register instructions and mechanism of the present invention.

FIG. 3 comprises a portion of the data flow chart of FIG. 2 showing additional details of the hardware necessary to implement the one cycle executable Branch-on-any-bit-in-any-register instructions of the present invention.

FIG. 4 is a timing diagram illustrative of the events which occur during the execution of the Branch-on-any-bit-in-any-register instructions of the present invention.

The heart of the previously referenced PRISM system is its Central Processing Unit (CPU). In fact, most of the other aspects of the system are designed to make available to the user the fundamental power of this engine, in addition to its CPU. The

16 0130381

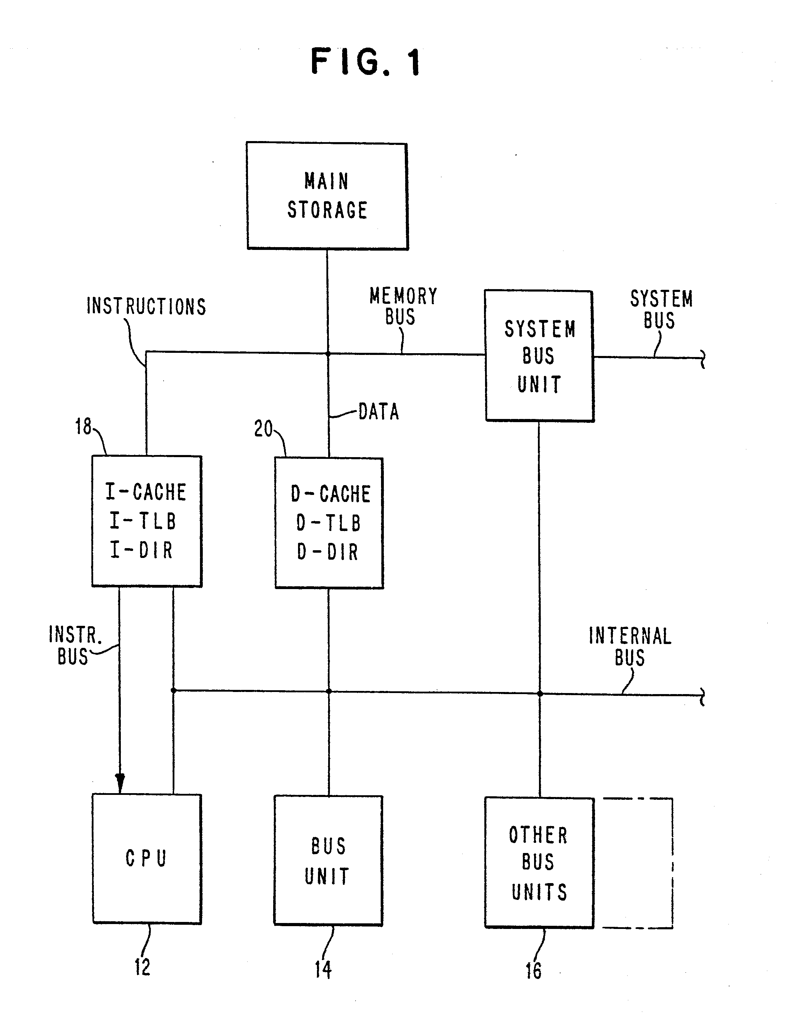

overall system consists of the main storage, cache facilities, relocate facilities, and system I/O (see FIG. 1). The cache is split into two parts, one for data, the other for instructions. (See previously referenced PCT Application No. US82/01830.)

As stated previously the CPU architecture is a radically simpler alternative to the complex prior art mainframes. The major distinguishing characteristics of the present PRISM system architecture is that its instructions are designed to execute in a single machine cycle by hardware.

That is, every primitive instruction takes exactly one machine cycle, except for accessing storage, which will usually be overlapped. The term primitive as used herein, relates to time rather than simplicity of concept. Thus, primitive is closely associated with the concept of a single machine cycle. That is to say the primitive instructions are those which are effectively executable within a single machine cycle although the actual functions may be relatively complex in terms of what actually takes place within the system hardware.

Going further, the term single machine cycle may be defined in a number of ways. Stated in one way, a single machine cycle is the period of the basic system clock which continually repeats itself during the operation of the system and during which time basic system operations are performed. Stated in a somewhat different way, a single machine cycle is the period of time necessary for the system to use the complete set of system clock pulses once, i.e., all of the pulses included in the basic
clock period.  Thus within a single machine cycle
all of the CPU data flow facility may be used once.

Complex functions are implemented in the system in
"micro-code" just as they are in conventional CPUs,
except that in the PRISM system this micro-code
is just code;that is, the functions are implemented
by software subroutines running on the primitive
instruction set.

Using the concept of executing complex operations
with code resident in cache, the number of cycles
required to do a particular job is at worst no
more than on a conventional (low-to-moderately
priced) CPU in which the complex instructions have
been microprogrammed.  But by carefully defining
the primitive instructions to be an excellent target
machine for the compiler, it is found that far fewer
cycles are actually required on the CPU.

The one machine cycle executable Branch-on-any-
bit-in-any-register instructions are exemplary
of newly conceived primitive instructions which
are intended to save significant amounts of time
in various branch testing operations, wherein
the 'branch' test can be accomplished simply
(one machine cycle) and effectively in the vast
majority of instances.

Thus, the PRISM system architecture and its instruction set are the achievement of the following three
pervasive strategies.  First a fast one-cycle per instruction CPU is defined with an instruction set which was a good target for compilation. Next, an approach to the storage hierarchy, I/O, relocate, and software were developed to overlap these activities with CPU execution, so that it waits minimally.

Finally, an optimizing compiler is developed which produces code which is safe and efficient enough so that the system can be built to assume that all programs have been compiled by this compiler.

In addition to being executable in one machine cycle, the other overriding theme of the instructions is their regularity. This has helped to make the hardware implementation easier. For instance:

All operands must be aligned on boundaries consistent with their size (i.e. halfwords on halfword boundaries, words on word boundaries). All instructions are fullwords on fullword boundaries.

Register name fields are made five bits long so that 32 register implementations are possible when the technology makes this choice desirable. (This aspect of PRISM system architecture makes it feasible to use the system to emulate other architectures which have 16 GPRs, since 16 PRISM registers are still available for emulator use. A major problem with using the primitive subset of S/370 instructions for emulating complex instructions is the just described register name field restriction.)

Four byte instructions also allow the target register of every instruction to be named explicitly so that the input operands need not be destroyed. This is generally called a "three address" format.

The PRISM system is a true 32 bit architecture, not a 16 bit architecture with extended registers. Addresses are 32 bits long;arithmetic is 32 bit two's complement;logical and shift instructions deal with 32 bit words (and can shift distances up to 31).

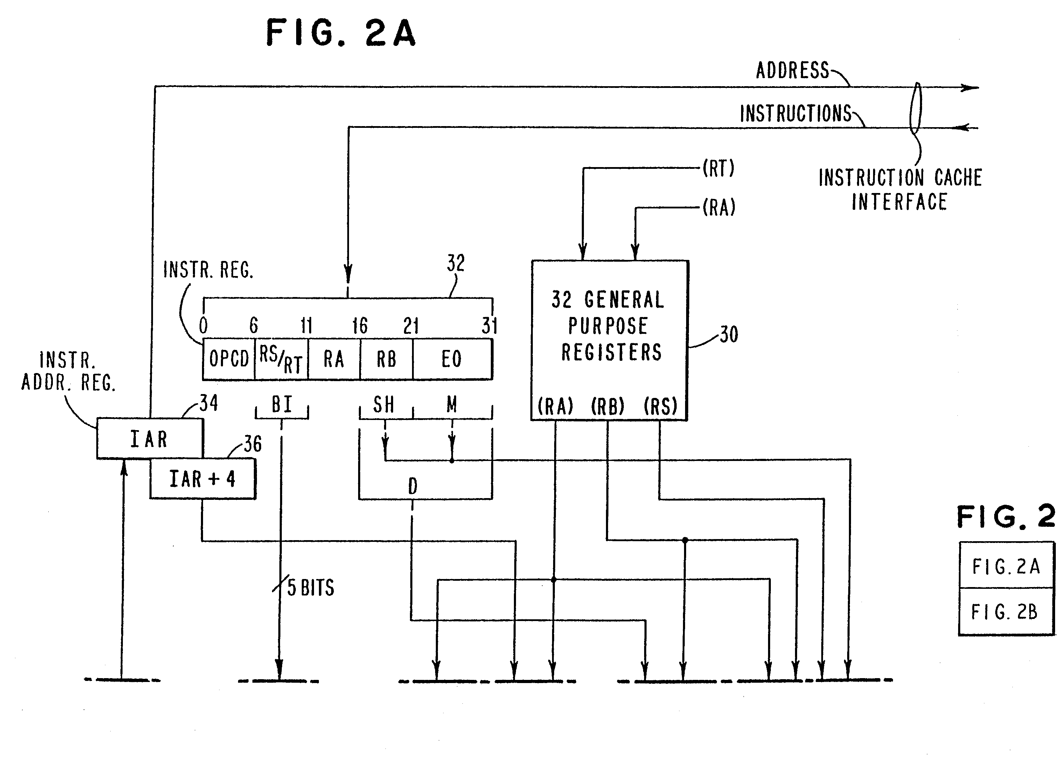

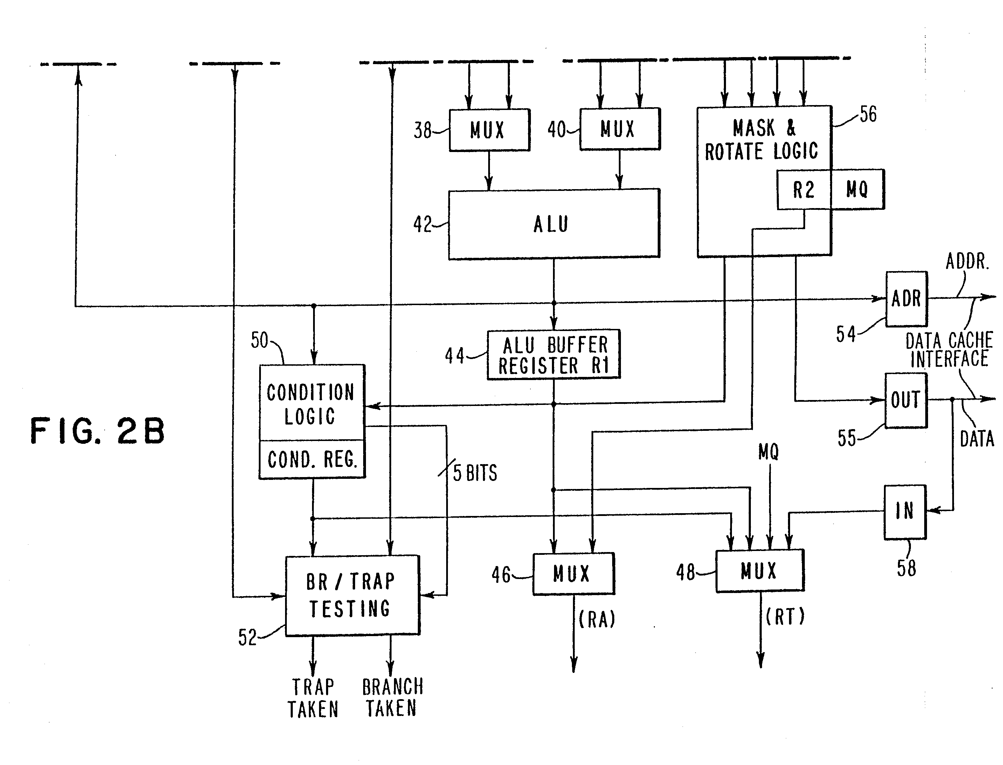

The major components of the PRISM CPU shown in the data flow diagram of FIG. 2 are a two-input ALU, a five-port (3-output, 2-input) general purpose register file (32 registers of 32 bits each), and condition logic and the condition register. The condition register (CR) is a 32 bit register which reflects the effect of certain operation, and provides a mechanism for testing (and branching).

Tables 1(a) and 1(b) comprise a complete listing of the 32 bits in the Condition Register as well as their function in the overall CPU architecture. None of the Condition Register bits enter into the operation of the present invention relating to the implementation of the present "one cycle executable 'Branch-in-any-bit-in-any-register' instructions". The setting and use of the Condition Register bits, is believed to be quite straightforward and well-known to those skilled in the art.

0130381

TABLE 1(a)

Condition Register Bit Designation

| Bit | Name | Description |
|---|---|---|
| 0 | SO | Summary Overflow |
| 1 | OV | Overflow |
| 2 | LT | Compares Less Than, Negative Value |
| 3 | GT | Compares Greater Than, Positive Value |
| 4 | EQ | Compares Equal, Zero Value |
| 5 | LL | Logical Less Than |
| 6 | LG | Logical Greater Than |
| 7 | CA | Carry from bit 0 |
| 8 | C4 | Carry from bit 4 |
| 9 | C8 | Carry from bit 8 |
| 10 | C12 | Carry from bit 12 |
| 11 | C16 | Carry from bit 16 |
| 12 | C20 | Carry from bit 20 |
| 13 | C24 | Carry from bit 24 |
| 14 | C28 | Carry from bit 28 |
| 15 | CD | Carry from any 4-bit nibble |
| 16 | PZ | Permanent Zero |
| 17-25 | | (Reserved for future use) |
| 26 | EC0 | External Condition 0 |
| 27 | EC1 | External Condition 1 |
| 28 | EC2 | External Condition 2 |
| 29 | EC3 | External Condition 3 |
| 30 | BB | Bus Busy (for Conditional Bus Operations) |
| 31 | HO | Halfword Overflow (overflow from lower 16 bits) |

## TABLE 1(b)

Functional Description of the Bits in
the Condition Register

(Note: Bits not set by an instruction retain
their old values.)

Bit 0 (SO) is the Summary-Overflow bit. Whenever
an instruction sets the overflow bit to indicate
overflow, it sets the SO bit to one, otherwise the
SO bit is unchanged. (The use of overflow as a
special indicator in divide step does not affect
Summary-Overflow.)

Bit 1 (OV), the Overflow bit, is set to indicate
that an overflow has occurred during an instruction operation. It is set to one on add and
subtract instructions if the carry out of bit zero
is not equal to the carry out of bit one. Otherwise it is set to zero. It also functions as a
special purpose indicator for the Divide Step
instructions. It is not altered by the compare
instructions.

Bits 2-6 are set to indicate the computation
result of the executed instruction.

Bit 5 (LL), the Logical-Less-Than bit, and Bit 6
(LG), the Logical-Greater-Than bit, are set
considering the two operands as 32 bit unsigned
integers. Bit 2 (LT), the Less-Than bit, Bit 3
(GT), the Greater-Than bit, and Bit 4 (EQ), the
Equal bit, are set considering the two operands
as 32 bit signed integers in two's complement
representation.

Bits 2-6 are also set by the compare and logical instructions.

Bit 7 (CA), the Carry bit, is set to indicate a carry from bit 0 of the computed result. On add and subtract instructions it is set to one if the operation generates a carry out of bit 0. If there is no carry out it is set to zero. It also functions as a special-purpose indicator for the Divide and Multiply instructions. It is not altered by the compare instructions.

Bits 7-14 indicate carry outs of each nibble in the ALU. Bit 8 (C4) is set to 1 if there is a carry out of bit 4. It is set to 0 if there is no carry out.

Bits 9-14 (C8-C28) are set similarly. These carries are provided to assist in performing decimal arithmetic.

Bit 15 (CD) is set to 1 if there is a carry out of any 4-bit nibble. Otherwise it is set to 0.

Programming note: CD can be used to verify that all of the decimal digits in a number are valid.

Bit 16 (PZ) is the permanent-zero bit. It is always zero and it cannot be reset to one. Its presence provides for an unconditional branch by use of the Branch False instruction, where the permanent zero bit is specified.

23

0130381

Bits 17-25 are reserved bits. They are implemented but are not modified by any conditions in the PRISM.

These bits of the condition register can be arbitrarily set by the Load Condition Register instruction. Subsequent fetches or tests will reflect those values.

Bits 26-29 (ECO through EC3), External Condition Bits. These bits are set to the values of the corresponding CPU inputs EXT-COND-0 through EXT-COND-3 when the EXT-COND-VALID is active.

Bit 30 (BB), the Bus Busy bit, is set to 1 if a CBO, CBOU, or CBOI instruction could not be executed by a bus unit because it was busy, otherwise it is set to zero for those instructions. It is unchanged by other instructions.

Bit 31 (HO), the Half Word Overflow bit, is set to indicate that an overflow on the lower 16 bits has occurred during an instruction operation. It is set to one on add and subtract instructions if the carry out of bit 16 is not equal to the carry out of bit 15. Otherwise it is set to zero. It is not altered by the compare instruction.

The instruction address register is conventional in nature and points to the location in memory where a desired instruction is resident.

The Mask and Rotate (M & R) Logic block contains the logic circuitry necessary to perform the M & R instructions specifically disclosed and described in previously referenced concurrently filed Application Serial No. 509836 (Docket YO983-011).

The Condition Logic & Condition Register are conventional to the extent that the setting of the various bits therein is required as the result of specified conditions which do or do not occur as a consequence of various system operations. Details of the particular condition register architecture utilized in the herein disclosed preferred embodiment of a PRIME system architecture are set forth and described in previously referenced concurrently filed Application Serial No. 509744 (Docket YO983-009).

Both the Data and Instruction Cache Interfaces provide paths for providing instruction addresses and data between the two caches and the CPU Details of the operation of these Caches are set forth in previously referenced copending PCT Application Serial No. 82/01830.

The MQ register is a 32-bit register whose primary use is to provide a register extension to accommodate the product for the Multiply Step instruction and the divided for the Divide Step instruction. It is also used as an operand storage location for long shift and rotate and store instructions.

The Instruction Register is a 32-bit register which is quite conventional in nature. The following instruction formats illustrated in Table 2(a) are utilized in the system.

All instructions are four bytes long and are located on full word boundaries.

Bits 0-5 always specify the op-code. For some instructions, bits 21-31 specify extended op-codes.

The remaining bits contain one or more of the following fields, in the indicated bit positions:

TABLE 2(a)

Instruction Formats

D-form, UL-form

```
0           6        11      16                    31
| OPCD   |   RT    |   RA  |          D            |
|        |   RS    |       |
|        |   BI    |       |
```

M-form

```
0           6        11      16        21          31
| OPCD   |   RT    |   RA  |   RB    |   MASK      |
|        |         |       |   SH    |
```

X-form

```
 0         6        11        16        21              31
|‾‾‾‾‾‾‾‾‾|‾‾‾‾‾‾‾‾|‾‾‾‾‾‾‾‾|‾‾‾‾‾‾‾‾|‾‾‾‾‾‾‾‾‾‾‾‾‾‾‾‾|
|  OPCD   '   RT   '   RA   •   RB   '      EO        |
|_____|_____|_____|_____|_____|
          '   RS   '        •   SH   '
          |_____|        |_____|
          '   BI   '
          |_____|
```

Table 2(b) contains a definition of the various instruction fields used in the instruction formats illustrated in Table 2(a).

### TABLE 2(b)

OPCD (0-5)

The basic op-code field of the instruction.

RT (6-10)

Name of the register used as the "target" to receive the result of an instruction.

RA (11-15)

Name of the register used as the first operand or as the target for rotate instructions.

RB (16-20)

Name of the register used as the second operand.

BI (6-10)

Immediate field specifying a register bit or a trap mask.

SH (16-20)

Immediate field specifying a shift amount.

D (16-31)

Immediate field specifying a 16 bit signed integer in two's complement notation. When this field is used with other fields that are 32 bits in length, the D field is always sign extended.

MASK (21-31)

Immediate field specifying a 32 bit string, consisting either of a substring of ones surrounded by zeros or a substring of zeros surrounded by ones. The encoding is as follows:

Bit 21

0 = ones surrounded by zeros

1 = zeros surrounded by ones

Bits 22-26

Index to leftmost bit of substring

Bits 27-31

Index to rightmost bit of substring

A mask field of '1000001111l' generates an all zero mask. A mask field of '0000001111l' generates an all one mask. The result of specifying an invalid mask (i.e., first index greater than last index) is undefined.

EO (21-31)

The extended op-code.

The four previously referenced copending applications filed concurrently with the present application all relate to specific hardware enhancements which render such a PRISM system more efficient.

Branching in general involves the idea that the sequential execution of instructions may be changed by the branch instructions. All instructions in the PRISM system are on fullword boundaries. Thus bits 30 and 31 of the generated branch target address are ignored by the CPU in performing the branch.

Branch instructions compute their target addresses by either adding a constant to the address of the branch instruction, by using the contents of a GPR (or the sum of two GPR's), or by specifying an absolute address. Whenever these addresses are computed using an immediate field from the instruction (D or LI) the immediate field is sign-extended to 32 bits.

In the various target forms, branches generally either branch only, branch and provide a return address, or branch conditionally. The present involves conditional branching only.

Many branch instructions are provided in the so-called "execute" form. These branches perform their stated function, and in addition provide for the unconditional execution of the (physically) subsequent instruction even if the branch is taken. The subsequent instruction is called the subject instruction of the branch-with-execute.

The subject instruction cannot itself be a branch instruction, a trap instruction, an SVC instruction, Add From Instruction Address or Add From

0130381

Instruction Address Immediate instruction, or
Return From Interrupt instruction.

On a successful non-execute form branch, there is
a time period between the time when the branch
determination takes place and the time when the
branch target instruction can be fetched for
execution.  The branch-with-execute instructions
allow a program to do useful work during this time,
since the execution of the subject instruction
will be concurrent with the fetch of the branch
target.  (It should be stressed that the execute
form is introduced only for reasons of efficiency).

The present invention allows a CPU architecture
like that employed in the PRISM system to provide
hardware to do a branch test not only on a single
specified bit in the condition register but on any
bit in any register.  It is designed to be executable
within one machine cycle, and performs a function
that would normally take several machine cycles
in a more conventional architecture.  It is of
course to be understood that a highly intelligent
compiler would be aware of the availability of such
instructions both with and without the 'execute'
form and would be able to apply same with the
greatest possible efficiency.

0130381

The Branch-on-any-bit-in-any-register instruction enables a program to perform in one cycle (or instruction), a branch based on the setting of any bit in the set of registers in that computer.

If the setting of bit b in register r is to determine the outcome of a branch instruction, it is only necessary to code:

    BT B,R,WHERE when it is desired to transfer control to location "where" if the bit is on, or

    BF B,R,WHERE when it is desired to transfer control when the bit is off.

In contrast, other computer architectures require more instructions to be executed, and these instructions generally occupy more space than the above-mentioned PRISM instructions. Furthermore, the alternative methods available in other computer architectures destroy part of the machine state, in that the process of examining the bit in question alters the condition register.

In the PRISM approach, the condition register is not altered as a result of the branch-on-bit instruction. As a consequence, conditions represented in the condition register will remain undisturbed whenever a branch-on-bit instruction is performed. This fact can be exploited by an

0130381

optimizing compiler to preserve the characterization
of other results in the condition register while
making a branching decision based on the setting
of a single bit in an arbitrary register.

By contrast, in a computer such as the IBM System/370,
there are several ways to achieve the effects of
branch-on-bit, but they all involve several instructions, they modify the condition register, and
have other side effects as well.  A few are listed
for comparison.

If it is not necessary to preserve the contents
of register r,

```
    N    R,MASK      (mask is a word of all zeros,
                      except for bit B).
    BNZ  WHERE
```

but this requires a reference to memory for the
mask, and requires storage of the mask, too.

Alternatively, if a memory reference is to be
avoided,

```
    SL   R,B      shift the bit in question to
                  the sign position
    LTR  R,R      set the condition register to
                  show R's sign
    BM   WHERE
```

but this requires an additional instruction.

If register R is not to be destroyed, but another register S is available, either of the two previously shown sequences can be preceded by:

```
LR  S,R      copy register R into register S
```

thereby lengthening the time and space to perform the function.

Finally, if register R is not to be destroyed and no other register is available, the following sequence is usually employed:

```
ST R,TEMP       copy register R into memory
TM TEMP+B/8,M   M is a Mask of all zeros
                except for the B mod(8) bit.
BNZ WHERE
```

This sequence requires two references to main memory.

Other current computer architectures offer similar choices to the ones shown above. Besides being slower and more space consuming, these alternatives pose a dilemma to a compiler designer. The first of the sequences shown is the fastest, but a compiler often cannot determine locally which situation applies, and so opts for the most general sequence: the last one shown above.

Contrast the above sequences with PRISM's straight-forward:

```
BT  B,R,WHERE
```

which is so fast, short, and which poses no code selection problems for a compiler.

0130381

Branch True, D-form

BT    BI, RA, D

| 0 | 6 | 11 | 16 | 31 |
|---|---|----|----|----|
| 40 | BI | RA | | D |

A bit, whose position is specified by the BI field, is selected from register RA if RA is not 0, or from the CR if RA is 0.  If the bit is a 1, then the address of the next instruction is computed by the sum of the address of this instruction and the sign-extended D field.  If it is a 0 the execution continues sequentially.

Condition Codes:

     Set: None

Branch False, D-form

BF    BI, RA, D

| 0 | 6 | 11 | 16 | 31 |
|---|---|----|----|----|
| 42 | BI | RA | | D |

A bit, whose position is specified by the BI field, is selected from register RA if RA is not 0, or from the CR if RA is 0.  If the bit is a 0, then the address of the next instruction is computed by the sum of the address of this instruction and the sign-extended D field.  If it is a 1 the execution continues sequentially.

0130381

Condition Codes:
    Set: None

Branch True with Execute, D-form
BTX    BI, RA, D

| 0 | 6 | 11 | 16 | 31 |
|---|---|----|----|----|
| 41 | BI | RA | D | |

A bit, whose position is specified by the BI field, is selected from Register RA if RA is not 0, or from the CR if RA is 0. If the bit is a 1, then the address of the next instruction is computed by the sum of the address of this instruction and the sign-extended D field. If it is a 0, the execution continues sequentially.

The subject instruction is executed regardless of the value of the bit tested.

Condition Codes:
    Set: None

Branch False with Execute, D-form
BFX    BI, RA, D

| 0 | 6 | 11 | 16 | 31 |
|---|---|----|----|----|
| 43 | BI | RA | D | |

A bit, whose position is specified by the BI field, is selected from register RA if RA is not 0, from the CR if RA is 0. If the bit is a 0, then the address of the next instruction is computed by the sum of the address of this instruction and the sign-extended D field. If it is a 1, the execution continues sequentially.

The subject instruction is executed regardless of the value of the bit tested.

Condition Codes:
        Set: None

Branch True, X-form
BTR     BI, RA, RB

| 0 | 6 | 11 | 16 | 21 | 31 |
|---|---|----|----|----|----|
| 63 | BI | RA | RB | 40 | |

A bit, whose position is specified by the BI field, is selected from register RA if RA is not 0, or from the CR if RA is 0. If the bit is a 1, then the address of the next instruction is set to the contents of the RB register. If it is a 0, the execution continues sequentially.

Condition Codes:
        Set: None

Branch True with Execute, X-form
BTRX     BI, RA, RB

| 0 | 6 | 11 | 16 | 21 | 31 |
|---|---|----|----|----|----|
| 63 | BI | RA | RB | 41 | |

A bit, whose position is specified by the BI field, is selected from register RA if RA is not 0, or from the CR if RA is 0. If the bit is a 1, then the address of the next instruction is set to the contents of the RB register. If it is a 0, the execution continues sequentially.

36    0130381

The subject instruction is executed regardless of the value of the bit tested.

Condition Codes:
    Set: None

Branch False, X-form
BFR    BI, RA, RB

| 0 | 6 | 11 | 16 | 21 | 31 |
|---|---|----|----|----|----|
| 63 | BI | RA | RB | 42 | |

A bit, whose position is specified by the BI field, is selected from register RA if RA is not 0, or from the CR if RA is 0.  If the bit is a 0, then the address of the next instruction is set to the contents of the RB register.  If it is a 1, the execution continues sequentially.

Condition Codes:
    Set: None

Branch False with Execute, X-form
BFRX    BI, RA, RB

| 0 | 6 | 11 | 16 | 21 | 31 |
|---|---|----|----|----|----|
| 63 | BI | RA | RB | 43 | |

A bit, whose position is specified by the BI field, is selected from register RA if RA is not 0, or from the CR if RA is 0.  If the bit is a 0, then the address of the next instruction is set to the contents of the RB register.  If it is a 1, the execution continues sequentially.

The subject instruction is executed regardless of the value of the bit tested.

Condition Codes:

Set: None

Since the present invention resides primarily in the novel structural combination and the method of operation of well-known computer circuits and devices, and not in the specific detailed structure thereof, the structure, control, and arrangement of these well-known circuits and devices are illustrated in the drawings by use of readily understandable functional block and data flow diagrams, which show only the specific details pertinent to the present invention. This is done in order not to obscure the disclosure with structural details which would be readily apparent to those skilled in the art in view of the description herein. Also, various portions of these systems have been appropriately consolidated and simplified to stress those portions pertinent to the present invention.

0130381

Referring to FIG. 1, an overall organizational block diagram of a typical PRISM system architecture is shown. The CPU 12 is depicted as a separate unit, however, it will be understood that the internal bus 10 is actually a composite member of the basic CPU architecture. Specific units shown directly attached to the internal bus 10 are the floating point unit 14 and a block designated other bus units 16 which, as will be readily understood, may comprise a plurality of different units separately attached to the bus 10. The instruction cache 18 and data cache 20 are also illustrated as connected to the internal bus and thus operable under various internal bus operation instruction formats (described previously). A system bus unit 22 is also shown connected to the internal bus which would primarily perform the function of system I/O operations to and from main storage as will be understood by those skilled in the art. No specific instructions for controlling the system bus unit are described herein, however, operation instruction to control such a system bus unit are well known and would be obvious to skilled in the art.

FIGS. 2A and 2B form a composite functional block and data flow diagram for the PRISM CPU. These two figures are organized as shown in the organizational diagram of FIG. 2.

The data flow within the basic PRISM organization is clearly shown in FIGS. 2A and 2B.

0130381

The basic CPU includes a five ports general purpose registers block 30 containing thirty two individual registers. The two inputs to the register block RT and RA as well as the three outputs RA, RB, RS indicate the particular instruction designated operands set forth in the previous description of the instruction formats. As will be apparent to those skilled in the art, the (address of the) particular general purpose register in which the various operands are to be stored or from which they are to be fetched would be specified in the various fields of the instruction register.

The organization of the instruction register 32 is straightforward. It should be noted that this is a 32-bit register with the various delineated fields within the register clearly shown in the drawing (designated bits) as well as the mnemonic representations of the various fields as used in the previously described instruction formats. The designated BI, SH and M beneath the primary instruction register box 32 indicates the mnemonic representation given to these fields in certain of the instructions. However, it should be understood that these are shown outside of the instruction box for convenience of reference only.

The instruction address register (IAR) 34 is also conventional in nature and would be initially loaded at the beginning of a program and suitably incremented or reloaded by the program subsequently as required. Block 36 labeled (IAR +4) contains the next instruction address.

The data flow from the instruction register 32 and the general purpose registers 30 is clearly shown in the figures thus, for conventional arithmetic operations the two multiplexers 38 and 40 may receive as input operands various fields from the instruction address register 34, instruction register 32 and the specified operands RA, RB from the general purpose registers 30. Thus the ALU 42 performs two operand operations and places the result in output buffer register 44. As will be apparent the output from the ALU may also go directly to the instruction address register 34, the condition logic and condition register block 50, the branch and trap testing logic 52 and the address gate 54 which supplies addresses to the system memory when required.

The output of the buffer register 44 is able to return data to the general purpose registers 30 via the multiplexers 46 and 48 depending upon whether the field RA or RT is specified by the instruction.

The mask and rotate logic block 56 performs a one-machine cycle executable mask and rotate operation set forth in more detail in copending application serial no. 509836 (YO983-011) referenced previously and does not enter directly into the present "branch" instructions. Similarily, the details of the condition logic and condition register block 50 are the subject matter of previously referenced copending application serial no. 509744 (YO983-009).

Block 52 entitled branch and trap testing comprises the circuitry necessary to perform the trap testing

41　　　　　　　　　　　0130381

function and produce a trap interrupt if necessary
and also to perform present "branch-on-any-bit-in-
any-register" testing of the present invention.

Gates 55 and 58 serve to gate data to and from the
system memory as required for certain specified
operations.  Gates 54, 55 and 58 together with
the 'Address' and 'Data' Buses comprise the
Data Cache Interface.

The register MQ shown in the mask and rotate
logic block 56 is an extension register for storing
the overflow contents from a number of arithmetic
operations such as multiply and divide.  It is
functionally located in this block for purposes of
the present embodiment as it is utilized during
certain mask and rotate instructions which are
set forth and claimed in copending application
serial no. 509836 (YO983-011).

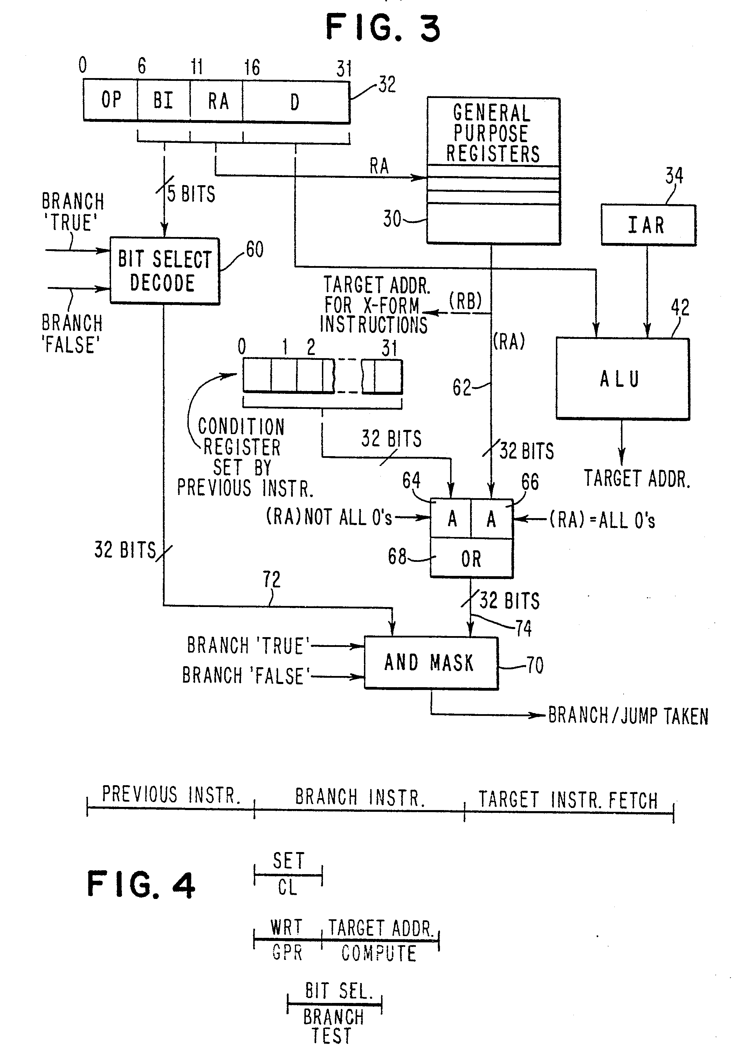

FIG. 3 comprises a combination functional block and
a flow diagram of the CPU similar to FIG. 2.  It
pertains strictly to that portion of the CPU which
is active during execution of the present branch-on-
any-bit-in-any-register instructions.  In this
figure the same reference numerals are used as in
FIG. 2 for the same functional blocks.  It will be
noted that the additional hardware necessitated by
the present mechanism is shown essentially at the
bottom of the figure.

It should also be understood that the particular
manner and under what conditions individual bits in
any of the registers to be tested are set, are
generally well-known in the art and do not form a
part of the present invention.  Particular words
stored in the general purpose registers which would

42   0130381

be the target word of one of the present instructions would normally be the contents of the condition register which would be saved as a result of some previous instruction in the instructions.

For a more detailed description of the specific condition register architecture, reference may be made to the previously set forth concurrently filed application serial no. 509744 (IBM YO983-009). However, it is to be clearly understood that the particular condition which caused a bit to be set in one of these registers is not relevant to the present invention where the bit is stored (i.e., what register) in the system and subsequently accessed for branch testing purposes is, of course, relevant. Thus the present invention could be utilized in a more conventional CPU configuration having a much smaller condition register than that described in the above copending application.

Referring now to FIG. 3, the particular fields in the instruction register 30 are the same as those shown for the 'branch to D-form' instruction described previously.

The BI field from the instruction register 32 feeds into the bit select decoder 60. Thus it would be noted this is a 5-bit field and the bits selected the decoder, produces 32-bit output which will have the fields of zeros with a 1-bit pointed to by the BI fields set 1, if a branch true conditions is to be tested for. Alternatively, if a branch false condition is to be tested for the output of the decoder 60 will be a field of ones with a zero in the bit position specified
by the BI field. The RA field in the instruction
register utilized address one of the 32 general
purpose registers pointed to by the particular
address present in the RA field. If the address
RA is not all zeros one of the GPR registers will
be selected and its output placed on line 62. The
32-bit bus is connected to AND gate 64. It will
be noted that AND gate 66 is connected to the 32-bit
output from the condition register.

At this point it will be remembered that the address
RA is set to all zeros specified that the condition
register is directed to be tested. If it is set
to any other number it indicates that one of the
GPR registers is to be tested. Two lines forming
the other input to the AND gates 64 and 66 are connected to circuitry (not shown) which tests the
condition of the RA field. If the RA field is not
all zeros as indicated in register 64, it will become
active and the contents of register RA will pass
through OR circuit 68 into the AND mask 70. Conversely,
if field RA were set at all zeros and the condition
register must be accessed AND gate 66 becomes
active and the contents of the condition register
will pass through OR gate 68 into the AND mask
circuit 70 where the actual branch is performed.

The operation of the AND mask 70 is quite
straightforward and is in this case called an
AND mask since in effect, the 32-bit field from
decoder 60 which is placed on cable 72 operates
as a mask since, if a 'branch true' condition
occurs, it will be set to all zeros with a 1 in
the bit position to be tested. Thus an output will be produced from the circuit only if a one similarly exists in the same bit position in the register being tested which enters AND mask 70 via cable 74. Similarly for the branch false condition the mask entering over cable 72 would be a field of all 1's with exception of the '0' in the particular bit to be tested. This way output will be produced from block 70 only if the '0' occurs in the designated bit position in the register to be tested entering via cable 74.

As will be apparent in the branch true case, the logic function performed by block 70 would be a straightforward AND function in each bit position flowing into a 32 input OR circuit. Conversely, for the branch false condition logic function BA NAND function (both inputs must be zero) going into a 32 bit OR circuit. Thus a specific embodiment for the AND mask 70 could comprise the cables 72 and 74 feeding in parallel into conventional 32 bit AND circuit and 32 bit NAND circuit with the outputs going to the appropriate switching gates into the aforementioned 32 bit OR circuit. Neither the AND nor the NAND circuit outputs utilizes the input to the OR circuit could be determined by the branch true and branch false lines shown. There are doubtless many other embodiments we could perform with the same logical functions. One shown is considered to be the simplest and most straightforward.

Referring now to FIG. 4 which is essentially a timing chart of the operations which occur during the execution of the herein disclosed one machine cycle executable branch-on-any-bit in any register instructions.

The event entitled READ/WRITE GPR refers to the reading and writing (previous instruction) of the registers of the GPRs specified by the fields at the instructions specifying GPR addresses, e.g., the RA field and the RB field in the case of an X-form branch instruction as described previously. In this latter case, the contents (RB) from the register pointed to by the RB field would comprise the target address for the next instruction for an X-form instruction.

The result of these operations is that at approximately the middle of the READ/WRITE GPR event the field (RA) is placed on cable 62 and is available to the actual branch testing circuitry. At this point the bit decoder 60 is activated and an appropriate mask placed on cable 72 and then circuit 64 or 66 is activated as appropriate to effect the bit select and branch test operations shown as the lower event in FIG. 4. The end of this event system will know whether a branch or jump is to be taken.

At this point it will be noted that an additional event entitled "target address" compute occurs during the branch instruction cycle. What this entails is the actual computation of the target address whether X-form or D-form in parallel with branch testing so that at the end of the branch instruction cycle the system is computed, the branch or

46    0130381

jump target address, whether or not it is needed. If it is needed it is available to the beginning of the next instruction and if not needed it is of course ignored. In this way, substantially all of the functions required of the system in such a branch test operation are completed in one machine cycle. This will be apparent to those skilled in the art. An additional cycle would be required for the target instruction fetch utilizing the target instruction address computed during the branch instruction cycle.

As noted previously, at this point the compiler might have inserted a "with execute" branch instruction in the instruction stream whereby an additional instruction could be executed in parallel with the target instruction fetch.

It will be seen from the preceding detailed description of the present Branch-on-any-bit-in-any-register instructions and the description of the hardware within the CPU which implements same, the one-machine cycle execution time is achieved from the standpoint of making the Branch test and target address computations. If a branch or jump is to be taken, extra cycles are required to access on the target instruction as will be appreciated by those skilled in the art.

While the invention has been set forth and described with respect to the herein disclosed preferred embodiment thereof, it will be readily appreciated by those skilled in the art, that many changes may be made in the form and detail of both the instructions and in certain hardware

47

0130381

details which might alter certain internal
operating sequences without departing from the
spirit and scope of the present invention as
set forth in the appended claims.

48                                    0130381

Claims:

1.    In a digital electronic computing system
      including memory means for storing instructions
      and data and a central processing unit (CPU) (12)
      for executing said instructions wherein said
      central processing unit includes at least an
      instruction unit (32) for accessing and decoding
      instructions and an arithmetic logic unit (ALU) (42)
      for performing the operations specified by said
      instructions, said CPU also including a
      condition register (50) which contains bits set
      in accordance with the results of specified
      ALU operations,

      characterized by,

      a method for performing Branch-on-any-bit-in-
      any-register instructions which comprises:

      specifying the bit in a register which is to
      be tested for a branch condition,

      specifying which general purpose register in
      the central processing unit contains the bit to
      be tested,

      specifying what bit condition is to be
      tested for,

      specifying the address of the "Branched-to
      instruction",

      the execution of said instruction comprising
      accessing the address of the register to be
      tested,

accessing the contents of the register to be tested,

determining from the bit field in the instruction register which specific bit is to be tested,

determining if the tested bit satisfies the branch condition and generating the branch address if the branch condition is met before the end of the current machine cycle, or

accessing the next sequential instruction if the branch condition is not met.

2. A method as set forth in claim 1 including nondestructively accessing the contents of the register to be tested whereby the data is retained therein subsequent to the accessing operation.

3. A method as set forth in claim 2 including selectively executing the next instruction in the instruction sequence after the branch instruction in parallel with the fetching of the target instruction even though the branch condition is met.

4. A method as set forth in claim 2 including accessing any of the general purpose registers in the central processing unit or the condition register within said central processing unit as the register to be tested.

5.  A method as set forth in claim 4 including
    specifying that the current content of the
    condition register is to be saved in a CPU
    general purpose register to allow a branch
    test to be made at a future time.

6.  In a digital electronic computing system
    having a single machine cycle executable
    instruction set and including a memory
    hierarchy comprising a main memory and a
    high-speed cache (18, 20), a central processing
    unit (CPU) (12) and a bus network interconnecting
    same, said CPU (12) including an arithmetic and
    logic unit (ALU) (42) for performing mathematical
    and logical operations on data supplied
    thereto, an instruction unit (32) operable in
    cooperation with a plurality of simultaneously
    accessible general purpose registers (30) and
    said ALU (42) for processing primitive instructions
    to be performed by said system, and condition
    code generating means (50) for generating a
    plurality of specified condition bits in
    accordance with the output of the ALU and
    the instruction unit,

    characterized by,

    a mechanism (60, 64, 68, 70) for performing
    one machine cycle executable
    Branch-on-any-bit-in-any-register
    instructions in said CPU, said mechanism
    including:

    means for accessing a specified register in
    the CPU and transferring the contents to a
    bit testing circuit means,

51

0130381

means for determining the address of a bit
to be tested from data in the instruction
register and conveying said address to
said bit testing circuit,

said bit testing circuit including means
for determining if the addressed bit has a
specified binary value,

means for generating the address of the
branch target instruction,

all of the above means being operable
during a first machine cycle,

means for accessing the target instruction
in the next machine cycle.

7. A mechanism for performing single machine cycle
executable Branch-on-any-bit-in-any-register
instructions as set forth in claim 6 further
including means for performing the next
instruction in the instruction sequence after
the Branch-on-any-bit-in-any-register
instruction in parallel even though the
branch condition is met.

8. A mechanism for performing single machine cycle
executable Branch-on-any-bit-in-any-register
instruction as set forth in claim 6 including
means for accessing the register containing the
branch data nondestructively.

0130381

9.   A mechanism for performing single machine cycle
     executable Branch-on-any-bit-in-any-register
     instructions as set forth in Claim 6 wherein
     said means for accessing includes means for
     addressing either a system general purpose
     register or the CPU condition register.

0130381

1/4

# FIG. 1

MAIN STORAGE

INSTRUCTIONS

MEMORY BUS

SYSTEM BUS UNIT

SYSTEM BUS

DATA

18

20

I-CACHE
I-TLB
I-DIR

D-CACHE
D-TLB
D-DIR

INSTR. BUS

INTERNAL BUS

CPU

BUS UNIT

OTHER BUS UNITS

12

14

16

# FIG. 2A

2/4

# FIG. 2

| FIG.2A |
|--------|
| FIG.2B |

0130381

FIG. 2B

**38** MUX    **40** MUX    MASK & ROTATE LOGIC **56**

R2   MQ

**42** ALU

ADDR.

ADR

**54**

DATA CACHE INTERFACE

**50** CONDITION LOGIC

COND. REG.

**44** ALU BUFFER REGISTER R1

OUT

**55**

DATA

5 BITS

MQ

IN

**58**

**52** BR / TRAP TESTING

**46** MUX

(RA)

**48** MUX

(RT)

TRAP TAKEN    BRANCH TAKEN

0130381

# FIG. 3

```
  0    6    11   16        31
┌────┬────┬────┬──────────┐
│ OP │ BI │ RA │    D     │──── 32
└────┴────┴────┴──────────┘
```

GENERAL PURPOSE REGISTERS

RA →

30

IAR ── 34

BRANCH 'TRUE'

5 BITS

BIT SELECT DECODE ── 60

BRANCH 'FALSE'

TARGET ADDR. FOR X-FORM INSTRUCTIONS ← (RB)

(RA)

62

ALU ── 42

TARGET ADDR.

```
  0  1  2        31
┌──┬──┬──┬──┬──┬──┐
│  │  │  │··│  │  │
└──┴──┴──┴──┴──┴──┘
```

CONDITION REGISTER SET BY PREVIOUS INSTR.

32 BITS

32 BITS

64        66

(RA) NOT ALL 0's → │ A │ A │ ← (RA)=ALL 0's

68 ── │  OR  │

32 BITS

32 BITS ── 74

72

BRANCH 'TRUE' →

BRANCH 'FALSE' →

AND MASK ── 70

→ BRANCH/JUMP TAKEN

---

| PREVIOUS INSTR. | BRANCH INSTR. | TARGET INSTR. FETCH |

# FIG. 4

SET
─────
CL

WRT | TARGET ADDR.
─────┼──────────
GPR  | COMPUTE

BIT SEL.
────────
BRANCH
TEST